(19) Europäisches Patentamt
European Patent Office
Office européen des brevets

(11) **EP 3 077 259 B1**

(12) **FASCICULE DE BREVET EUROPEEN**

(45) Date de publication et mention de la délivrance du brevet:
**01.01.2020 Bulletin 2020/01**

(21) Numéro de dépôt: **14809459.2**

(22) Date de dépôt: **04.11.2014**

(51) Int Cl.:
**B60W 10/06** *(2006.01)*   **B60W 10/08** *(2006.01)*
**B60W 10/11** *(2012.01)*   **B60W 20/00** *(2016.01)*
**B60K 6/20** *(2007.10)*

(86) Numéro de dépôt international:
**PCT/FR2014/052795**

(87) Numéro de publication internationale:
**WO 2015/082784 (11.06.2015 Gazette 2015/23)**

(54) **PROCEDE DE GESTION DE L'ENERGIE SUR UN VEHICULE HYBRIDE COMPORTANT UNE TRANSMISSION A RAPPORTS DISCRETS**

ENERGIEVERWALTUNGSVERFAHREN BEI EINEM HYBRIDFAHRZEUG MIT EINEM GETRIEBE MIT EINZELÜBERSETZUNGEN

ENERGY MANAGEMENT METHOD ON A HYBRID VEHICLE COMPRISING A TRANSMISSION WITH DISCRETE RATIOS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2013 FR 1361974**

(43) Date de publication de la demande:
**12.10.2016 Bulletin 2016/41**

(73) Titulaire: **Renault S.A.S.**
**92100 Boulogne-Billancourt (FR)**

(72) Inventeurs:
• **MIRO-PADONAVI, Thomas**
  **F-78310 Maurepas (FR)**
• **DEBERT, Maxime**
  **F-78000 Versailles (FR)**
• **CHAMAILLARD, Yann**
  **F-45130 Le Bardon (FR)**
• **COLIN, Guillaume**
  **F-45160 Olivet (FR)**

(56) Documents cités:
EP-A2- 2 052 939        US-A1- 2011 118 920
US-A1- 2011 130 901

**Description**

La présente invention concerne la gestion de répartition des flux énergétiques dans un groupe motopropulseur hybride de véhicule automobile.

Plus précisément, elle a pour objet un procédé de gestion de l'énergie d'un groupe motopropulseur de véhicule hybride comportant au moins un moteur thermique et une machine électrique d'entraînement couplés aux roues du véhicule par une transmission à rapports discrets, par minimisation, sur chaque point de fonctionnement du moteur, d'un critère énergétique lié à la somme de la consommation du moteur thermique et de la consommation électrique de la machine électrique.

Un groupe motopropulseur de véhicule automobile à propulsion ou à traction hybride, comprend un moteur thermique et une ou plusieurs machines électriques, alimentées par au moins une batterie embarquée à bord du véhicule.

Les systèmes de commande des groupes motopropulseurs hybrides sont conçus pour gérer le fonctionnement et la synchronisation des différents moteurs, en fonction de conditions de roulage, afin de limiter la consommation de carburant, et de minimiser les émissions de particules polluantes. On parle de gestion des flux d'énergies thermique et électrique, pour désigner notamment la stratégie de pilotage mise en œuvre dans le système de commande en vue d'optimiser la répartition de puissance entre les flux d'énergie d'origine thermique et les flux d'énergie d'origine électrique.

Dans le cas particulier, des véhicules hybrides à rapports discrets, le choix du rapport de transmission est pris en charge par une unité de calcul. Le système de commande du véhicule dispose de deux degrés de liberté pour réaliser la demande de couple du conducteur, en minimisant la consommation : le rapport de transmission d'une part, et la répartition de couple entre la (es) machine(s) électrique(s) et le moteur thermique d'autre part.

Par la publication FR 2 988 674, on connaît un procédé de détermination d'un facteur énergétique d'équivalence, représentant la pondération appliquée entre l'apport d'énergie d'origine thermique, et l'apport d'énergie d'origine électrique, dans une loi de gestion de l'énergie du véhicule (LGE), chargée de déterminer, en temps réel, la répartition de couple entre le moteur thermique et la(les) machine(s) électrique(s). La répartition doit respecter la volonté du conducteur, en minimisant la consommation globale du véhicule sur son trajet. Le facteur d'équivalence vise à minimiser, sur un point de fonctionnement, la consommation énergétique globale. Il peut être piloté de manière discrète en fonction de l'état d'énergie instantané de la batterie et d'une cible d'énergie, ainsi que des conditions de roulage du véhicule.

Si le véhicule dispose d'une transmission automatique, la LGE doit également déterminer le rapport de transmission à appliquer, pour réduire au maximum la consommation énergétique. L'application d'un simple critère énergétique classique, dans la loi de gestion de l'énergie, peut conduire à une commande erratique des changements de rapports, ou ne pas réduire la consommation de manière optimale.

La publication US 2011/0130901 décrit une méthode particulière de contrôle d'un véhicule hybride utilisant un filtre pour éviter les problèmes de désagrément.

La présente invention vise à intégrer le choix du rapport dans la loi de gestion de l'énergie d'un véhicule hybride à commande des vitesses automatisée, en trouvant le meilleur compromis entre un critère énergétique (consommation) et l'agrément de conduite (occurrence des changements de rapport).

Dans ce but, elle propose que le critère minimisé soit un critère mixte ($H_{\text{mixte}}$), somme d'un critère énergétique et d'un critère de désagrément, lié à la gestion des modes cinématiques de la transmission.

De préférence, le critère de désagrément est proportionnel au critère énergétique.

Les mesures proposées permettent de traiter les problèmes d'agrément, dans l'optimisation de la consommation, pour trouver le meilleur compromis.

Dans un mode d'application non limitatif de l'invention, les modes cinématiques incluent au moins deux rapports de transmission en mode électrique, et deux rapports de transmission en mode hybride.

D'autres caractéristiques et avantages de la présente invention ressortiront clairement de la description suivante, d'un mode de réalisation non limitatif de celle-ci, en se reportant aux dessins annexés, sur lesquels la figure unique illustre l'application d'une loi de gestion d'énergie, choisissant un rapport qui minimise la consommation à chaque instant.

La consommation énergétique globale d'un véhicule hybride, est la somme de sa consommation su moteur thermique (fonction du couple effectif et du régime moteur), et de la consommation de sa machine électrique (fonction de son couple de son régime).

La consommation du moteur thermique est déterminée à partir d'une cartographie de débit de carburant, fonction du point de fonctionnement (couple $C_{th}$, régime $\omega$). La consommation électrique de la batterie est déduite de la puissance électrique absorbée, ou émise, par la machine, en fonction du couple appliqué et de son régime. Elle peut être pondérée, dans la LGE, par un facteur d'équivalence, qui traduit la prédominance de l'énergie électrique sur le carburant dans la minimisation, car il dépend du niveau d'état de charge de la batterie. Dans ce calcul, la puissance électrique échangée par la batterie est divisée par le pouvoir calorifique du carburant utilisé, pour être traduite en débit de carburant, et devenir homogène à la consommation moteur. On peut alors déterminer un critère énergétique H, répondant à l'équation :

$$H = Conso\_thermique\ (C_{th},\ \omega_{th}) + s.\ (Conso\_batt),$$

où $H$ est un débit de carburant exprimé en gramme par seconde, et $s$ est le facteur d'équivalence fonction de l'état de charge de la batterie.

Dans un tel procédé, on minimise, sur chaque point de fonctionnement du moteur, un critère énergétique $H$ lié à la somme de la consommation du moteur thermique *Conso_thermique* et de la consommation électrique de la machine électrique *Conso_batt* multipliée par un facteur d'équivalence *s*, qui pondère l'apport d'énergie d'origine thermique et l'apport d'énergie d'origine électrique.

De manière générale, la répartition de couple moteur/machine, ainsi que le mode cinématique imposé à la transmission par la LGE, visent à minimiser le critère énergétique H. Cependant, si la transmission est pilotée en fonction de la minimisation du critère énergétique, elle peut vite avoir un fonctionnement erratique, l'occurrence des changements de rapport imposée étant trop élevée pour être appliquée dans de bonnes conditions. En effet, si la LGE choisit le rapport minimisant le coût énergétique H à chaque instant, un changement de rapport peut se voir imposé, même si le gain énergétique est infime.

La figure unique illustre la succession des modes cinématique demandés par la LGE pour minimiser le critère énergétique $H$ à partir d'un exemple particulier sur un cycle conventionnel, dit « Artémis urbain », pour un groupe motopropulseur disposant au moins de deux rapports en mode électrique ZE1 et ZE2, et de deux rapports en mode hybride HYB1 et HYB2, soit quatre modes cinématiques courants. L'occurrence des demandes de changements de mode atteint sur ce cycle 14,5 changements par minute, soit 49 changements/km.

Pour limiter les changements de rapport, l'invention prévoit d'intégrer un critère de désagrément, induit par les changements de rapport de transmission, dans le critère énergétique traditionnel $H$ de la LGE. Le but recherché est d'imposer un changement de rapport, seulement si le gain énergétique qui en résulterait, est suffisamment important pour compenser le désagrément induit. Le mode cinématique adopté devient ainsi celui qui minimise un nouveau critère, dit critère mixte énergétique/agrément $H_{mixte}$. Le résultat obtenu est que la gestion des rapports de transmission, ou plus généralement des modes cinématiques de la transmission, satisfait à un compromis acceptable entre l'efficacité énergétique du groupe motopropulseur (GMP), et l'agrément de conduite et des passagers.

Conformément à l'invention, le critère énergétique à minimiser, est une fonction mixte $H_{mixte}$, où l'on ajoute au critère $H$ défini plus haut, un critère de désagrément $D$ :

$$H_{mixte} = \underbrace{H}_{\text{Critère énergétique}} + \underbrace{\left| H \times P\acute{e}nalit\acute{e}\_agr\acute{e}ment(Mode\ courant, Mode\ cible) \right|}_{\text{Critère désagrément}}$$

Le critère de désagrément $D$ est le produit du critère énergétique H et d'une « pénalité » qui s'exprime en fonction du mode cinématique courant, et du mode cinématique dont on souhaite évaluer le critère. $D$ introduit dans l'équation un « surcoût énergétique », qui vient s'ajouter au critère énergétique $H$, pour pénaliser les changements de mode.

Le critère de désagrément est de préférence proportionnel au critère énergétique, afin que l'occurrence des changements de mode soit homogène sur toute la plage d'utilisation du véhicule, notamment pour toutes les valeurs du critère énergétique $H$.

Le critère de désagrément $D$ est exprimé de préférence en valeur absolue, pour être toujours positif, même si le critère énergétique $H$ est négatif, notamment en situation de « freinage récupératif ». La pénalité d'agrément traduit un désagrément spécifique au changement de mode considéré : en effet, tous les changements de mode cinématique d'une transmission ne se valent pas en termes de désagrément, notamment car certains passages s'effectuent sans rupture de couple, et d'autres s'effectuent avec rupture de couple.

Le critère mixte, qui est minimisé, conformément à l'invention, est la somme du critère énergétique $H$ et du critère de désagrément $D$, lié à la gestion des modes cinématiques de la transmission. Pour cela $D$ peut être le produit du critère énergétique $H$ et d'une pénalité d'agrément A, liée à un changement éventuel de mode cinématique de la transmission.

La pénalité d'agrément $A$ sur les changements de mode peut s'exprimer de la façon suivante :

$$P\acute{e}nalit\acute{e}\ agr\acute{e}ment(Mode\ courant, Mode\ cible) = \kappa \times \beta\ (Mode\ courant, Mode\ cible)$$

où $\kappa$ est une constante de calibration qui permet d'influencer de façon globale la pénalité de tous les changements de mode possibles. la pénalité d'agrément est le produit d'une constante de calibration $\kappa$ par une matrice carrée qui contient la pénalité de transition $\beta$ entre chacun des changements de modes de la transmission. La matrice $\beta$ peut contenir la pénalité individuelle de chacun des changements de mode. Dans le cas particulier d'une architecture hybride possédant neuf modes cinématique, $\beta$ est une matrice 9*9, contenant la pénalité des 81 transitions possibles pour cette transmission entre un mode courant et un mode cible.

$$\beta = \begin{bmatrix} C_{1,1} & \cdots & C_{1,9} \\ \vdots & \ddots & \vdots \\ C_{9,1} & \cdots & C_{9,9} \end{bmatrix} \begin{array}{c} \text{Mode courant} \\ \\ \text{Mode cible} \end{array}$$

Dans cette matrice, la pénalité $C_{i,j}$ correspondant à la transition du mode courant i vers le mode cible j, se trouve donc à la $i^{eme}$ ligne $j^{eme}$ colonne de $\beta$. $\beta$ est une matrice de calibration, qui doit être adaptée à l'architecture de chaque transmission considérée. L'approche retenue pour déterminer les coûts de transition de $\beta$ est basée sur les étapes mécaniques composant chacune des transitions. Les transitions entre deux modes cinématiques sont composées d'une suite de séquences d'opérations incluant par exemple :

- une synchronisation de la machine électrique,
- une synchronisation du moteur thermique,
- un démarrage du moteur thermique,
- un arrêt du moteur thermique, ou
- une rupture de couple.

On peut ainsi calibrer une pénalité pour chacune de ces séquences, la calibration étant d'autant plus forte que la séquence est jugée fortement pénalisante. Le coût total de la transition $C_{i,j}$ s'exprime comme la somme des coûts des séquences qu'elle fait intervenir (coefficient 1) ou non (coefficient 0), soit dans cet exemple :

$$C_{i,j} = \{0;1\}*\text{Coût synchronisation moteur} + \{0;1\}*\text{Coût synchronisation machine} +$$
$$\{0;1\}*\text{Coût démarrage moteur} + \{0;1\}*\text{Coût arrêt moteur} + \{0;1\}*\text{Coût rupture de couple}$$

La pénalité d'agrément peut s'exprimer en pourcentage (sans dimension). Le critère d'agrément est alors un pourcentage du critère énergétique : plus le désagrément de la transition est élevé, plus ce pourcentage doit l'être également.

Dans le cas particulier d'une transmission hybride automatisée, dont les modes cinématiques incluent au moins deux rapports en mode électrique ZEV1, ZEV2 et deux rapports en mode hybride HYB1, HYB2, la détermination du mode cinématique appliqué par la LGE sous contrainte d'agrément, peut s'illustrer de la façon suivante. Si le mode cinématique courant est le ZEV1, les modes cinématique acceptables sont : ZEV1, ZEV2, HYB1, HYB2, et les transitions à rupture de couple sont fortement pénalisées (Matrice $\beta$ calibrée en conséquence). Dans le tableau ci-dessous, on a indiqué pour chaque mode, le critère énergétique H associé à la répartition de couple thermique/électrique optimale. Le mode cinématique associé au critère énergétique le plus faible est ZEV2, qui serait appliqué sans considérer de contrainte d'agrément.

| | Critère énergétique H [g/s] | Classement sur critère énergétique | Pénalité agrément [%] | Critère agrément [g/s] | Critère mixte H_mixte [g/s] | Classement sur critère mixte |
|---|---|---|---|---|---|---|
| ZEV1 | 1,6 | 3 | 0 | 0 | 1,6 | 2 |
| ZEV2 | 1,3 | 1 | 30 | 0,39 | 1,69 | 3 |
| Hyb1 | 1,4 | 2 | 10 | 0,14 | 1,54 | 1 |

(suite)

| | Critère énergétique H [g/s] | Classement sur critère énergétique | Pénalité agrément [%] | Critère agrément [g/s] | Critère mixte H_mixte [g/s] | Classement sur critère mixte |
|---|---|---|---|---|---|---|
| Hyb2 | 2 | 4 | 40 | 0,8 | 2,8 | 4 |

Dans cet exemple, la pénalité d'agrément a été calibrée à 10% pour un démarrage du moteur thermique et à 30% pour une rupture de couple. Le mode courant étant ZEV1, la pénalité pour l'atteindre est nulle, car ce choix n'entraine aucun changement. La pénalité pour le mode ZEV2 est de 30%, car il entraine une rupture de couple. La pénalité pour le mode HYB1 est de 10% car le passage sur ce mode implique un démarrage moteur. Enfin, la pénalité pour l'HYB2 est de 40%, car le passage HYB2 entraînerait une rupture de couple et un démarrage moteur.

Dans cet exemple, le mode cinématique minimisant le critère mixte est HYB1. C'est donc lui qui sera choisi dans l'optique d'un compromis entre la consommation et l'agrément. En effet, la rupture de couple est fortement pénalisée, ce qui explique que le mode ZEV2 ait été évité au profit de l'HYB1. Si la calibration de la pénalité d'agrément avait pénalisé plus fortement le démarrage moteur, un mode ZEV aurait été retenu à la place d'HYB1.

En conclusion, il faut souligner, que sur des architectures hybrides, disposant de modes « tout électrique » ou « thermique pur », l'application stricte de lois de passage de vitesses classique ne permet pas de garantir le respect d'une consigne d'état de charge batterie. Par ailleurs, une gestion de la transmission, basée uniquement sur la minimisation d'un critère énergétique, est difficilement acceptable, car l'occurrence des changements est toujours trop élevée, pour satisfaire aux exigences d'agrément de conduite et de fiabilité mécanique de la transmission. A l'inverse, une gestion de la transmission basée sur une loi de passage classique, dépendante de la vitesse et de la position de la pédale d'accélérateur, ne permet pas d'exploiter tout le potentiel de réduction de consommation offert par un groupe motopropulseur hybride. La solution proposée, qui se base sur la minimisation d'un critère mixte, énergétique/agrément, permet d'aboutir à une gestion de la transmission qui respecte le compromis souhaité entre la consommation et l'agrément, grâce à la calibration de la pénalité d'agrément. Les transitions peuvent ainsi être plus ou moins pénalisées suivant leur effet sur l'agrément de conduite. La formulation du critère mixte est très générale, et cette méthode peut s'appliquer à une très grande variété de groupes motopropulseurs (GMP).

L'adaptation spécifique de la méthode à un GMP donné réside dans la calibration de la pénalité d'agrément. L'exemple d'application non limitatif décrit ci-dessus, concerne un véhicule hybride. Toutefois, la méthode s'applique dans les mêmes conditions sur la gestion d'une transmission de groupe motopropulseur thermique, non hybridée. On peut notamment remplacer le critère énergétique $H$, par un critère adapté au GMP thermique, en particulier le débit de carburant associé au rapport de transmission, qui permet de respecter la volonté conducteur.

## Revendications

1. Procédé de gestion de l'énergie d'un groupe motopropulseur de véhicule hybride comportant au moins un moteur thermique et une machine électrique d'entraînement couplés aux roues du véhicule par une transmission à rapports discrets, par minimisation sur chaque point de fonctionnement du moteur d'un critère énergétique ($H$) lié à la somme de la consommation du moteur thermique (*Conso_thermique)* et de la consommation électrique de la machine électrique (*Conso_batt*) multipliée par un facteur d'équivalence *(s)* pondérant l'apport d'énergie d'origine thermique et l'apport d'énergie d'origine électrique, **caractérisé en ce que** le critère minimisé est un critère mixte ($H_{\text{mixte}}$), somme du critère énergétique ($H$) et d'un critère de désagrément ($D$), lié à la gestion des modes cinématiques de la transmission.

2. Procédé de gestion de l'énergie selon la revendication 1, **caractérisé en ce que** le critère de désagrément est proportionnel au critère énergétique ($H$).

3. Procédé de gestion de l'énergie selon la revendication 2, **caractérisé en ce que** le critère de désagrément ($D$) est le produit du critère énergétique ($H$) et d'une pénalité d'agrément ($A$) liée à un changement éventuel de mode cinématique de la transmission.

4. Procédé de gestion de l'énergie selon la revendication 1, 2 ou 3 **caractérisé en ce que** le critère de désagrément ($D$) est exprimé en valeur absolue.

5. Procédé de gestion de l'énergie selon la revendication 3 ou 4, **caractérisé en ce que** la pénalité d'agrément est le produit d'une constante de calibration ($\kappa$) par une la matrice carrée qui contient la pénalité de transition ($\beta$) entre chacun des changements de modes de la transmission.

6. Procédé de gestion de l'énergie selon la revendication 5, **caractérisé en ce que** la pénalité de transition entre les modes cinématiques ($\beta$) est basée sur une séquence d'opérations propre à la transition considérée.

7. Procédé de gestion de l'énergie selon la revendication 6, **caractérisé en ce que** la séquence d'opérations de la transition entre deux modes cinématiques inclut :

    - une synchronisation de la machine électrique,
    - une synchronisation du moteur thermique,
    - un démarrage du moteur thermique,
    - un arrêt du moteur thermique, ou
    - une rupture de couple.

8. Procédé de gestion de l'énergie selon l'une de revendications précédentes, **caractérisé en ce que** les modes cinématiques de la transmission incluent au moins deux rapports en mode électrique (ZEV1, ZEV2) et deux rapports en mode hybride (HYB1, HYB2).

**Patentansprüche**

1. Energieverwaltungsverfahren für einen Antriebsstrang eines Hybridfahrzeugs, das mindestens einen Verbrennungsmotor und eine elektrische Antriebsmaschine umfasst, die über ein Getriebe mit getrennten Übersetzungen mit den Rädern des Fahrzeugs verbunden sind, durch Minimieren, für jeden Arbeitspunkt des Motors, eines Energiekriteriums (H), das mit der Summe aus dem Verbrauch des Verbrennungsmotors (*Conso_thermique*) und aus dem Stromverbrauch der elektrischen Maschine (*Conso_batt*) verknüpft ist, die mit einem Äquivalenzfaktor (*s*) multipliziert wird, der die Zufuhr von Energie thermischen Ursprungs und die Zufuhr von Energie elektrischen Ursprungs gewichtet, **dadurch gekennzeichnet, dass** das minimierte Kriterium ein gemischtes Kriterium ($H_{mixte}$) ist, Summe aus dem Energiekriterium (*H*) und aus einem Diskomfortkriterium (*D*), das mit der Verwaltung der kinematischen Betriebsarten des Getriebes verknüpft ist.

2. Energieverwaltungsverfahren nach Anspruch 1, **dadurch gekennzeichnet, dass** das Diskomfortkriterium proportional zum Energiekriterium (*H*) ist.

3. Energieverwaltungsverfahren nach Anspruch 2, **dadurch gekennzeichnet, dass** das Diskomfortkriterium (*D*) das Produkt aus dem Energiekriterium (*H*) und aus einer Komfortstrafe (*A*) ist, die mit einer etwaigen Änderung der kinematischen Betriebsart des Getriebes verknüpft ist.

4. Energieverwaltungsverfahren nach Anspruch 1, 2 oder 3, **dadurch gekennzeichnet, dass** das Diskomfortkriterium (*D*) als absoluter Wert ausgedrückt wird.

5. Energieverwaltungsverfahren nach Anspruch 3 oder 4, **dadurch gekennzeichnet, dass** die Komfortstrafe das Produkt aus einer Kalibrierungskonstante ($\kappa$) und einer quadratischen Matrix ist, welche die Transitionsstrafe ($\beta$) zwischen jeder der Änderungen von Betriebsarten des Getriebes enthält.

6. Energieverwaltungsverfahren nach Anspruch 5, **dadurch gekennzeichnet, dass** die Transitionsstrafe zwischen den kinematischen Betriebsarten ($\beta$) auf einer spezifischen Vorgangssequenz der betrachteten Transition beruht.

7. Energieverwaltungsverfahren nach Anspruch 6, **dadurch gekennzeichnet, dass** die Vorgangssequenz der Transition zwischen zwei kinematischen Betriebsarten beinhaltet:

    - eine Synchronisierung der elektrischen Maschine,
    - eine Synchronisierung des Verbrennungsmotors,
    - ein Starten des Verbrennungsmotors,
    - ein Stoppen des Verbrennungsmotors, oder
    - eine Drehmomentunterbrechung.

8. Energieverwaltungsverfahren nach einem der vorhergehenden Ansprüche, **dadurch gekennzeichnet, dass** die kinematischen Betriebsarten des Getriebes mindestens zwei Übersetzungen in der elektrischen Betriebsart (ZEV1, ZEV2) und zwei Übersetzungen in der Hybridbetriebsart (HYB1, HYB2) beinhalten.

## Claims

1. Method for managing the energy of a hybrid vehicle power unit comprising at least one internal combustion engine and an electric drive machine, coupled to the wheels of the vehicle by a transmission with discrete ratios, by minimization, at each operating point of the engine, of an energy criterion ($H$) linked to the sum of the consumption of the internal combustion engine (*Conso_thermique*) and the electrical consumption of the electrical machine (*Conso_batt*) multiplied by an equivalence factor ($s$) weighting the supply of energy from the internal combustion engine and the supply of energy of electrical origin, **characterized in that** the minimized criterion is a mixed criterion ($H_{mixed}$) which is the sum of an energy criterion ($H$) and a discomfort criterion ($D$) linked to the management of kinematic modes of the transmission.

2. Energy management method according to Claim 1, **characterized in that** the discomfort criterion is proportional to the energy criterion ($H$).

3. Energy management method according to Claim 2, **characterized in that** the discomfort criterion ($D$) is the product of the energy criterion ($H$) and a comfort penalty ($A$) linked to a possible change of kinematic mode of the transmission.

4. Energy management method according to Claim 1, 2 or 3, **characterized in that** the discomfort criterion ($D$) is expressed as an absolute value.

5. Energy management method according to Claim 3 or 4, **characterized in that** the comfort penalty is the product of a calibration constant ($K$) by a square matrix which contains the penalty ($\beta$) of transition between each of the changes of the transmission modes.

6. Energy management method according to Claim 5, **characterized in that** the penalty ($\beta$) for transition between the kinematic modes is based on a sequence of operations specific to the transition concerned.

7. Energy management method according to Claim 6, **characterized in that** the sequence of operations for the transition between two kinematic modes includes:

   - synchronization of the electrical machine,
   - synchronization of the internal combustion engine,
   - starting of the internal combustion engine,
   - stoppage of the internal combustion engine, or
   - an interruption in torque.

8. Energy management method according to any of the preceding claims, **characterized in that** the kinematic transmission modes include at least two ratios in electric mode (ZEV1, ZEV2) and two ratios in hybrid mode (HYB1, HYB2).

Cycle Artémis Urbain

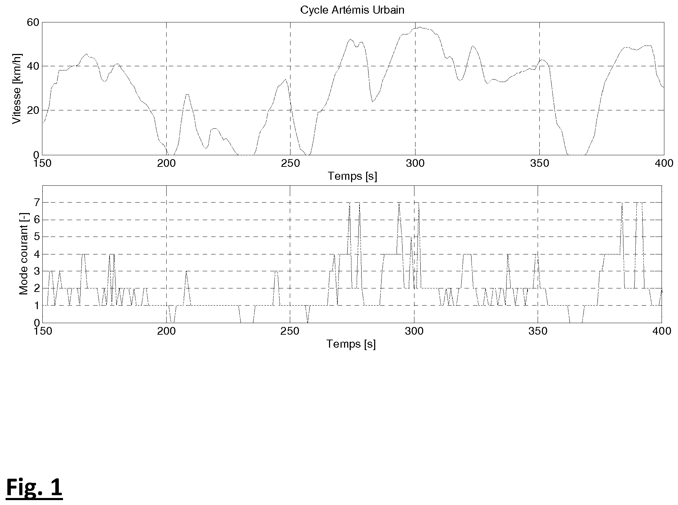

**Fig. 1**

**EP 3 077 259 B1**

## RÉFÉRENCES CITÉES DANS LA DESCRIPTION

**Documents brevets cités dans la description**

- FR 2988674

- US 20110130901 A